# EUROPEAN PATENT SPECIFICATION

(11) **EP 1 912 078 B1**
(45) Date of publication and mention of the grant of the patent: **24.07.2013**
(21) Application number: 06122118.0
(22) Date of filing: 11.10.2006
(51) Int. Cl.: G01S 7/487, G01S 17/88

(54) **Laser altimeter, method for range finding and space craft comprising such laser altimeter**
Laserhöhenmeter, Verfahren zur Entfernungsmessung und Raumfahrzeug mit einem derartigen Höhenmesser
Altimètre laser, procédé de télémétrie et engin spatial comprenant un tel altimètre laser

(43) Date of publication of application: 16.04.2008
(73) Proprietor: Oerlikon Space AG, 8052 Zürich (CH)
(72) Inventor: Tüchler, Michael, 8055 Zürich (CH)
(74) Representative: OK pat AG

(56) References cited:
- US-A- 5 243 553
- US-A- 6 115 113
- US-A1- 2003 141 459
- US-B2- 6 748 336
- DONALD R GREER ET AL: "Maximum-Likelihood Multiresolution Laser Radar Range Imaging" IEEE TRANSACTIONS ON IMAGE PROCESSING, IEEE SERVICE CENTER, PISCATAWAY, NJ, US, vol. 6, no. 1, January 1997 (1997-01), pages 36-46, XP011026095 ISSN: 1057-7149

## Description

The present invention concerns a laser altimeter, a method for range finding and a satellite, or other kind of space craft, comprising such a laser altimeter.

It is an object of the present invention to provide a laser altimeter and a method for performing a range finding operation being reliable, robust and accurate.

It is another object of the invention to provide for a setup and approach where as much useful information is extracted from optical signals which are back reflected by a surface, e.g. the surface of a planet or other object, as possible.

A rangefinder according to the preamble of claims 1 and 11 is known from US-A-6115113 A (Flockencier).

According to the present invention an apparatus is provided for performing a range finding operation. This apparatus comprises a laser source for emitting a high energy laser pulse towards a surface to be investigated or scanned. A sensor is provided for receiving a portion of the back reflected laser pulse. Means are employed for performing an analog-to-digital conversion of output signals provided by the sensor to obtain digital sensor data samples. A set of these sensor data samples is recorded in a sample storage. A hardware control unit is employed for processing this set of said sensor data samples by scanning them with generic pulse shapes which are allowed to vary continuously over one or more variation parameters.

This approach, if implemented in hardware, is more powerful and delivers better results than any of the hitherto known software-based approaches. A field programmable gate array is very well suited as key element of the hardware control unit.

Further advantageous embodiments are claimed in the respective dependent claims.

A method in accordance with the invention is covered by the independent claim 1, and advantageous embodiments of this method are claimed in the respective dependent claims.

The present invention is particularly well suited for implementation inside a satellite or other space craft, where the available computational power is limited and also the power supplies have certain constraints.

### Brief description of the drawings

For a more complete description of the present invention and For further objects and advantages thereof, reference is made to the following description, taken in conjunction with the accompanying drawings, in which:
- **FIG. 1**: is a schematic block diagram of an apparatus in accordance with the present invention;
- **FIG. 2**: is a schematic block diagram of another apparatus in accordance with the present invention;
- **FIG. 3**: is a schematic block diagram of yet another apparatus in accordance with the present invention;
- **FIG. 4**: is a set of sensor signal samples containing a received pulse arriving at time 1.4 µs;
- **FIG. 5**: is an example of pulse families ri(t-δ,σ) with i=1,2,3,4 and δ =0.

### Detailed description

The basic aspects of the present invention will be addressed in connection with a first embodiment. In the following sections, the basic procedure of range finding is described.

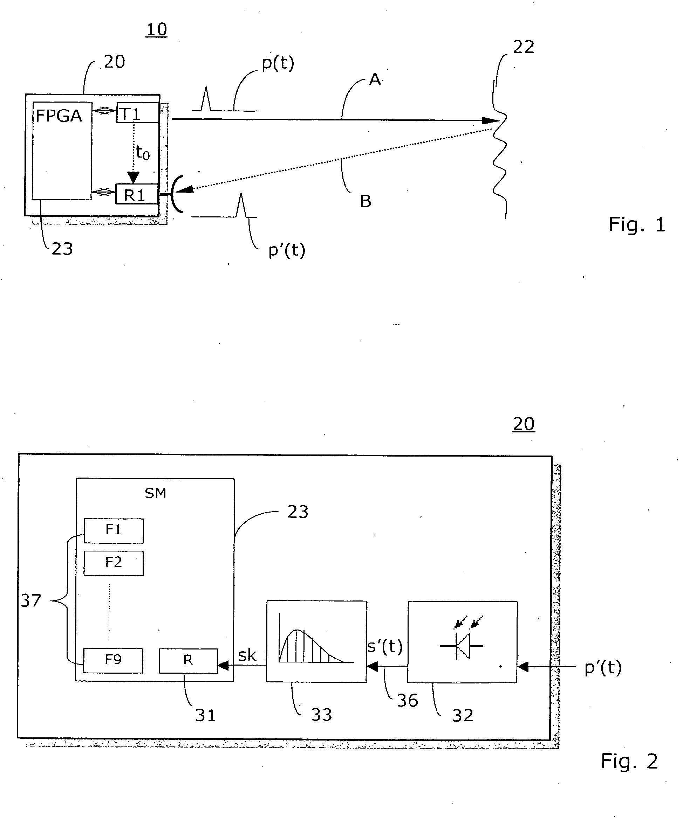

According to the present invention, a laser source T1 is employed in a range finder 10, as illustrated in Fig. 1. This laser source T1 is designed and arranged so that it can be caused to emit a high energy laser pulse p(t). A high energy laser pulse p(t) is an optical pulse that has a high peak power and that is emitted by the laser source T1. A laser beam, depicted in Fig. 1 by an A, carries the laser pulse p(t) and is directed towards a surface 22 that is to be investigated. This surface 22 could be the surface of a planet, for instance, or some other object to be investigated or scanned.

Depending on the characteristics of this surface 22, the laser pulse p(t) is back-reflected in different manner. A portion p'(t) of the light beam p(t) is received by a receiver R1 and captured in order to be processed and analyzed.

The reflected pulse p'(t) is received as optical signal which is later converted into corresponding electrical signals s'(t) representing said received portion. This conversion could be done by means of a respective converter 32. Very well suited as converter is an avalanche photo diode (APD).

The electrical signals s'(t) at an output side 36 of the converter 32 are sampled by means of a sampling unit 33 (e.g. a digitizer) to obtain a digital representation (herein referred to as digital sensor data samples sk) which carries at least some of the information content contained in the electrical signal s'(t) at the output 36 of the converter 32. The information content contained in the electrical signal s'(t) actually corresponds to the information content that was carried by the reflected pulse p'(t) which in turn represents or characterizes the surface 22 or at least certain aspects or features thereof.

According to the present invention, a range window is then determined based on a time-shift Δτ due to the delay between the time of transmission t0 (start pulse) of said pulse p(t) and the time of reception (time of arrival: TOA) of said pulse p'(t). A set of digital sensor data samples sk, which corresponds to this range window, is stored in a buffer (register) 31 to be used for analysis (e.g. for a topographical feature extraction).

The digital sensor data samples sk in the buffer 31 are processed using a hardware control unit 30 (e.g. comprising a field programmable gate array 23) by providing a correlation of pulse features of said electrical signals s'(t) at the output 36 of the converter 32 with variation parameters of a number of given generic pulse shape families implemented for instance by means of one ore more filters 37.

As a result of this analysis a pulse shape family can be determined where the variation parameters match the variation parameters of said electrical signals s'(t) at the output 36 of the converter 32.

In the following sections, further details of a currently preferred embodiment of the invention are addressed.

According to the present invention, arbitrary Finite impulse response (FIR) templates with parametric time of arrival (TOA) estimation are utilized for a coarse detection of the time of arrival (TOA) of the pulse p'(t). In other words, the range detection is done by means of a parametric estimation using a number of pre-defined templates.

The FIR templates are implemented as hardware template FIR filters 37 with arbitrary impulse response. An adaptation to a received pulse p'(t) (i.e. a received portion of the laser pulse p(t) after it has been reflected at a surface 22 to be investigated) is performed via a parametric estimation.

According to the present invention as part of the range detection a pulse feature extraction is performed. This is also done using the arbitrary FIR templates with parametric feature estimation.

According to the present invention the FIR templates can be generated using known approaches, such as the know how from the following publicly available documents: "BELA-CSAG-RP-TPP-00003, BELA Instrument System Trade-Off Record and Preliminary Architecture", Contraves Space AG, July 2005; and "LAPE-1-CSAG-TR-2005", LAPE Definition Study, Metrology System Identification, January 2004.

As part of the range detection also the fine detection of the TOA of the pulse p'(t) is carried out, according to the invention. Here again the arbitrary FIR templates with parametric TOA estimation are used. This means that according to the invention there is no differentiation between coarse and fine TOA estimation. The fine arrival-time (fine TOA) and the topographical feature extraction are both made using the hardware implemented FIR templates.

In a preferred embodiment of the invention a reduction of the probability of false alarms is achieved by utilizing a weighting envelope to penalize correlator outputs which are far away from previously detected TOA values. In other words, a correlator envelop is utilized to penalize those template filter 37 outputs which are far away from previous measurements. This is done in hardware, too.

The respective weighting envelope parameters are calculated with a Kalman predictor (Kalman filter), that is, the updating is done by software using envelop parameters provided by a Kalman filter.

For a range window tracking according to the invention a continuous state-space model is employed to select an arbitrary range window position using a Kalman predictor. According to the present invention a continuous state-space-based estimation of the center of the range window is performed by means of software.

It is to be understood that the details addressed above can be used in connection with any of the embodiments disclosed and claimed herein.

Further details of the invention are now addressed with reference to Fig. 2. Fig. 2 is a schematic block diagram of an apparatus 20. This figure is used to illustrate certain aspects of the invention which are carried out by means of hardware. The back reflected signal p'(t) is received by a detector 32, e.g. an avalanche photo diode which is preferably cooled by a Peltier cooling element (not shown). The detector 32 delivers an analog output signal s'(t) via an output line 36 to an analog-to-digital converter 33. At the output side of the analog-to-digital converter 33 so-called digital sensor data samples sk are provided. At least a portion of these data samples sk is stored or recorded in a buffer 31, register R, or in another suitable memory. This portion of the data samples is herein referred to as set of sensor data samples.

This set of sensor data samples is now processed by means of a state machine (SM), e.g. a state machine implemented in the field programmable gate array 23. The state machine is a part of the hardware control unit 30, for instance. The processing is done by scanning the set of sensor data samples with generic pulse shapes ri(t) which are allowed to vary continuously over one or more variation parameters δ, σ.

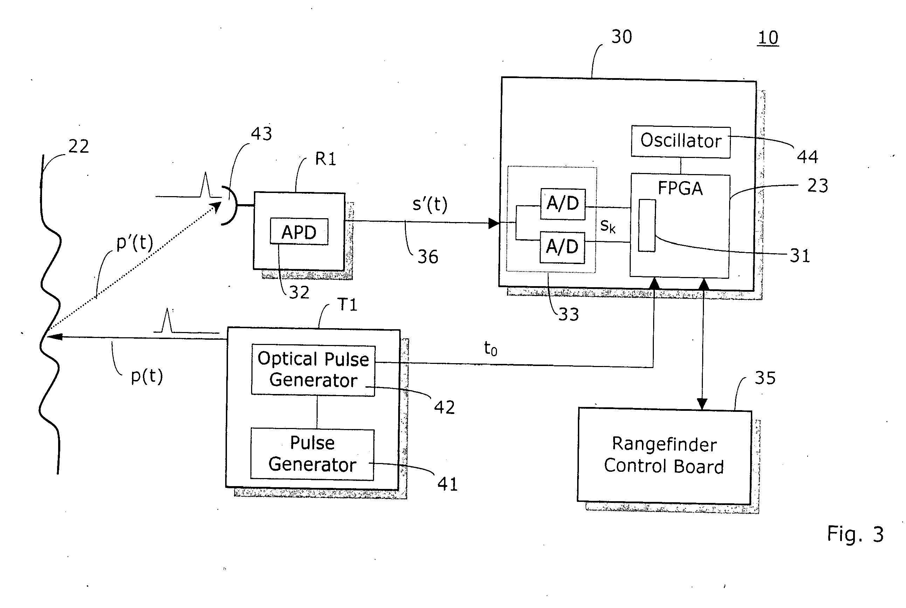

Further details of an advantageous implementation of the invention are now discussed in connection with Fig. 3. As illustrated in Fig. 3, the apparatus 10 comprises a transmitter T1 with a laser source 42. The transmitter T1 may for instance also comprise a pulse generator 41 connected to the laser source 42. The transmitter T1 emits a high energy laser pulse p(t) towards the surface 22 to be investigated. On the receiver side of the laser altimeter apparatus 10 there is a sensor 32 (also referred to as detector) for receiving a portion p'(t) of the laser pulse p(t) after it has been reflected at said surface 22. Preferably an avalanche photo diode (APD) is employed as sensor 32. The sensor 32 provides an analog output signal s'(t) via an output line 36 to means 33 for performing an analog-to-digital conversion. These means 33 are employed in order to obtain digital sensor data samples sk. A sample storage 31 (e.g. a buffer, register or other kind of memory) is provided for storing a sub-set of these sensor data samples sk.

The hardware control unit 30, as described before, is employed for processing the set of said sensor data samples sk by scanning them with generic pulse shapes ri(t) which are allowed to vary continuously over one or more variation parameters δ, σ.

Or in other words, the processing is according to the invention done by means of the hardware control unit 30 (e.g. comprising a field-programmable gate array 23) by providing a correlation of pulse features of the analog sensor signal s'(t) with the variation parameters δ, σ of a number of given families of generic pulse shapes {ri(t-δ,σ)}. In a subsequent step the respective pulse shape family {ri(t-δ,σ)} is determined where the variation parameters δ, σ match the variation parameters δ, σ of the analog sensor signal s'(t).

Once the best match is obtained, one or more of the desired features (experiment data), listed below can be derived:
- pulse arrival time (TOA), and/or
- pulse features, and/or
- pulse energy.

In the following, further details of the apparatus 10 are addressed. As stated above, the transmitter T1 generates an optical pulse p(t) with a predefined power shape. The receiver R1 comprises back-end optics (BEO), e.g. an optical antenna 43, to focus the back-reflected light p'(t) to an avalanche photo diode (APD) 32 serving as sensor. The avalanche photo diode 32 may be mounted on a module that includes a trans-impedance amplifier (TIA) to convert the output current of the APD 32 into a voltage signal s'(t). The TIA output signal may be amplified using an amplifier chain consisting of a low-noise amplifier (LNA) and a variable gain amplifier (VGA) before it is sent to the hardware control unit 30. The VGA mentioned can be employed to ensure that the sensor signal s'(t) fits into a prescribed voltage range that is required by the analog-to-digital converters 33 (ADCs). The VGA gain value may be controlled via a digital control signal provided from the hardware control unit 30.

The APD 32 may be cooled using a Peltier element, which allows to cool and to stabilize the APD temperature. The Peltier element can be controlled via a digital control signal provided by the hardware control unit 30, for instance. This control signal may be derived from an APD temperature measured using an analog temperature sensor, whose output signal is connected to the hardware control unit 30.

This function and all other functions of the hardware control unit 30 may be mastered by a state machine SM or a field programmable gate array 23 (FPGA). This FPGA 23 may be clocked at 80MHz, for instance, using an oscillator 44.

The analog signal s'(t) (sensor signal) is in the example depicted in Fig. 3 sampled by two ADCs with 40MHz sampling frequency. The ADC's sample clocks are 180 degrees phase-shifted, which yields an effective sampling frequency of 80MHz. The sample data sk provided by the ADCs 33 is fed into the FPGA 23 for further (digital) signal processing. The FPGA 23 implements the inventive and most demanding range finder signal processing such that only a minor calculation load is left for implementation in software on a rangefinder control board 35. The precise determination of the start of a laser pulse p(t) transmission is indicated to the FPGA 23 and/or hardware unit 30 via the digital signal s0 (start pulse) provided from the transmitter T1.

Certain analog and/or digital signals may be routed by the FPGA 23 to the rangefinder control board 35, whose software routines are responsible for interpreting the input signals and calculating the output signals. The rangefinder control board 35 may comprise a CPU, RAM and ROM blocks, and several interfaces.

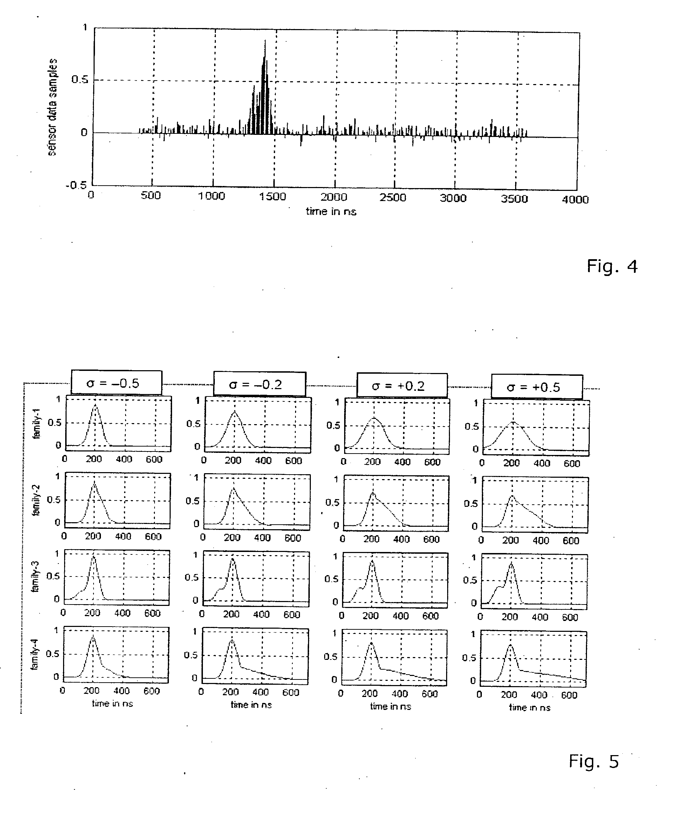

In the following sections more details of the inventive methodology will be addressed. The Fig. 4 depicts a typical set of sensor signal samples sk containing a received pulse p'(t) arriving at the time 1.4ps. The depicted time range of roughly 3µs is only a small portion of the complete sample window of 200µs duration that may be stored/recorded by the FPGA 23 or by some other memory 31.

According to the present invention, a digital signal processing approach for extracting the desired experiment data (e.g. pulse arrival time, pulse features, pulse energy) is employed. This is possible since an FPGA 23 is employed which offers a much higher flexibility and performance than other software-based systems used so far. The tasks of the range finding is implemented in the FPGA 23 as follows:
- Determine the start time of the 200µs range window (set of sensor data samples) with respect to the pulse transmission time t0 (e.g. the rising edge of the signal start pulse from the transmitter T1 for each experiment carried out. This process is herein called "range window tracking".
- Track the arrival time (TOA) of the received pulses p'(t) reliably within the 200µs range window over consecutive experiments despite the very large noise in the sensor signal s'(t). This is called "range tracking".
- Determine the desired experiment data (e.g. pulse arrival time, pulse features, pulse energy) from the 200µs range window samples with high reliability. This part is called "range detection". The range detection may also include the reliable detection of the rising edge of the signal s0 start pulse from the transmitter T1 using a purely digital approach in the FPGA 23. The determination of the desired experiment data consumes the largest computational resources, since a large number of samples in the range window must be processed in a rather complicated manner to extract all desired pulse features. As shown herein, the present range detection implementation uses appropriate pulse models (families) to reduce this amount as much as possible.

The range detection deals with the problem of extracting the desired experiment data (e.g. pulse arrival time, pulse features, pulse energy) from the samples of the sensor signal in the range window (e.g. a 200µs range window). The proposed hardware architecture according to the invention contains/implements all necessary processing steps to estimate/determine the following parameters:
- pulse arrival time within the range window,
- pulse energy,
- pulse features.

These parameters allow information about the scanned surface 22 to be obtained. Given the high processing power that can be achieved with the FPGA 23, the range detection proposed herein is very flexible and powerful, since it scans the sensor data sk with generic pulse shapes that are allowed to vary continuously over a variation parameter.

p(t) denotes the shape of the laser pulse that is transmitted by the altimeter's transmitter T1 at the starting time t0=0, i.e., the pulse shape p(t) is zero for all t<0. Let sk denote the sensor data samples in the 200µs range window, stored in the FPGA 23 or some other memory 31. Since the nominal sample rate in the present embodiment is 80Msps, there are 200µs*80Msps=16000 samples in the range window, i.e., the sample index k ranges from 1 to 16000. Note that the received pulse shape p'(t) is different from p(t), since the laser pulse signal p(t) being reflected from the planetary surface 22 becomes in general wider and furthermore contains information about the surface's features.

The range detection procedure must process the samples sk to reliably estimate the parameters as well as the surface features subject to an appropriate model of this surface 22. For simplicity, it is assumed that the range window contains the complete received pulse p'(t-Δt). Recall that this is the task of the range tracking and range window tracking algorithm. The general solution for finding a pulse shape in a signal disturbed by AWGN (additive white Gaussian noise) would be a correlation. It is the purpose of this correlation to compare a set of reference pulses {ri(t)} with the received signal p'(t) and the maximum correlation then is taken as the detected pulse p'(t). The problem with this approach, however, is that when attempting to estimate the delay Δt and the pulse features a potentially huge number of tests (calculation of a correlation) need to be carried out.

Since this calculation load cannot be handled within a satellite or other space craft, the following inventive algorithm is proposed: instead of testing a fixed number of pulse templates with a static time shift and feature selection, both the feature and the time shift parameter are made random, i.e., they become variables of the estimation process. Thus, the set of reference pulses {ri(t)} is replaced by the set {ri(t-δ,σ)}, where σ is the feature variable and δ is the time-shift variable. The index i indicates that there are different "pulse families" that may be compared with the received signal p'(t).

The Fig. 5 depicts in the rows 4 example families ri(t-δ,σ) of pulse shapes with i=1,2,3,4, where each column illustrates how the feature parameter σ changes the pulse shape. For example, the first family in Fig. 5 is a Gaussian pulse with varying pulse width. The variation parameters of the other families depicted in Fig. 5 are the tail length (family 2 and 3) and the height of the side-pulse (family 4). Note that the valid range for σ was chosen to be the interval [-0.5,+0.5]. This has been done for normalization purposes.

One still needs to calculate a potentially very large number of correlations for various combinations of i, δ, and σ and determine the maximum correlation. However, using the parametric description ri(t-δ,σ) of the pulse family, it is possible to perform the maximization over the correlation symbolically by means of a so-called maximum likelihood (ML) approach.

According to the invention, a generic parameterization of the family ri(t-δ,σ) as function of the δ and σ being constrained to the normalized interval [-0.5,+0.5] is provided where the family ri(t-δ,σ) is a point in a bi-quadratic surface in the two variables δ and σ being restricted to the interval [-0.5,+0.5].

The applicability of a bi-quadratic pulse family approximation on the pulse shapes is a very good fit. A suitable algorithm allows to determine the pulse delay Δt, the pulse attenuation (corresponding to pulse energy) from a maximizing correlation, and the pulse features from an index and a continuous-valued parameter.

It is an advantage of the present solution that it provides for a huge reduction in complexity. Moreover, the proposed approach is very powerful, since the parameters δ (and thus Δt) as well as σ can be measured with arbitrary accuracy (limited only by the noisiness of the samples sk).

The Fig. 2 depicts the block diagram of an efficient hardware implementation of the inventive approach. The sensor data samples sk enter a storage block 31, which holds for instance the 16000 sensor samples sk of the range window. Before the pulse parameter estimation can start, the DC offset of the samples sk is measured and removed from the samples in order that the pulse feature parameter σ is estimated reliably (without systematic error). Also, the noise variance of the samples sk is measured to have information available about the noisiness of the samples, which indicates how reliable the pulse parameter estimates as well as the maximizing correlation.

This correlates can be calculated in 9 filters 37, whose coefficients are equal to the basis functions bi(kT,p,q) sampled at multiples of the sample time period T. The basis functions bi(t,p,q) are derived as part of the bi-quadratic pulse family approximation such that ri(t-δ,σ) is well approximated by the sum over the expression bi(t,p,q)·δ^{p}·σ^{q} for p,q=0,1,2. For example, to test 4 pulse families given a range window consisting of 16000 sensor samples sk, the processing engine is utilized for about 4*16000=64000 times. This engine is implemented inside the FPGA 23 using a series of dedicated arithmetic logic units (ALUs) that are optimized for the processing functions of algorithms, i.e., the ALU can execute efficiently multiply-accumulate and division operations.

The start pulse detection on the rising edge of the signal s0 start pulse from the transmitter T1 arriving at the FPGA 23 determines the exact start time of the laser pulse p(t) emitted by T1.

The respective edge-detection of the start pulse signal is done digitally using a Look-up table (LUT) - approach, where the LUT-inputs are a chain of delay elements.

The range tracking deals with the problem of tracking the received laser pulses p'(t) within the range window and is responsible for the following outputs:
- aid the range detection algorithm to minimize the probability of false alarm at low signal-to-noise ratios (SNRs) utilizing previous pulse arrival time estimates and information about the S/C orbit and planetary topography,
- aid the range window tracking algorithm by providing information about when to shift the start time of the range window in order that the received pulse is always within the window.

A range window tracking procedure deals with the problem of finding the range window where the received laser pulse p'(t) arrives. Aside from the sampled sensor data sk that can be utilized to find the appropriate start time of the range window (delay between the arrival of the signal s0 start pulse and the start of the sensor data sampling), additional (a-priori) information can be taken into account to improve the start time determination performance such as
- orbit data provided by the satellite or other space craft (S/C),
- previous altitude of the S/C before loosing track,
- statistics of the altitude in the absence of orbit data.

## Claims

1. Method for performing a range finding procedure comprising the steps:
- emitting a high energy laser pulse (p(t)) by a laser source (T1) for transmission towards a surface (22) to be investigated,
- receiving a portion (p'(t)) of said laser pulse (p(t)) after it has been reflected at said surface (22) by a sensor (32),
- said sensor (32) performing a light-to-electricity conversion to obtain an analog sensor signal (s'(t)) representing said received portion (p'(t)),
- sampling the analog sensor signal (s'(t)) to obtain digital sensor data samples (sk) which carry at least some of the information content contained in said received portion (p'(t)),
- storing a set of sensor data samples, which correspond to a certain range window, of said analog sensor signal (s'(t)) in a buffer (31),
- processing said sensor data samples (sk) by means of a hardware control unit (30)
**characterized in that** the:
- said processing of said sensor data samples (sk) is performed by scanning them with generic pulse shapes ({ri(t-δ,σ)}), where t denotes time, i is a family index, and { } denotes the set of all shapes belonging to family i, which are allowed to vary continuously over one or more variation parameters (δ, σ), where δ is a time-shift variable of the pulse shape and σ is a feature variable of the pulse shape,
- said processing provides a correlation of pulse features of said analog sensor signal (s'(t)) with said variation parameters (δ, σ) of a number of given families of generic pulse shapes ({ri(t-δ,σ)}), and wherein then the respective pulse shape family ({ri(t-δ,σ)}) is determined where the variation parameters (δ, σ) match the variation parameters (δ, σ) of said analog sensor signal (s'(t)).

2. The method of claim 1, wherein said processing is done by means of a field-programmable array (23).

3. The method of claim 1 or 2, comprising the step:
- performing a range window tracking operation.

4. The method of claim 3, wherein the range window tracking operation is performed by:
- determining a start time of said range window with respect to a pulse transmission time (t0).

5. The method of one of the claims 1 through 4, comprising the step:
- performing a range tracking operation to assure that the probability of a false alarm over a consecutive run of range finding experiments is kept small.

6. The method of claim 5, wherein the range tracking operation is performed by:
- tracking the arrival time (TOA) of several received pulse (p(t)) over a consecutive run of range finding experiments within said range window.

7. The method of one of the claims 1 through 6, comprising the step:
- performing a range detection operation by means of a hardware range detection implementation to extract desired experiment data from said set of sensor data samples in said range window.

8. The method of one of the claims 1 through 6, comprising the step:
- performing a range detection operation by means of a hardware range detection implementation using appropriate pulse models in order to reduce the amount of computations.

9. The method of claim 7 or 8, wherein the range detection operation is performed by:
- determining one or more of the following desired experiment data:
- pulse arrival time (TOA), and/or
- pulse features, and/or
- pulse energy
from said set of sensor data samples in said range window.

10. The method of claim 7 or 8, wherein the range detection operation is performed using a purely digital approach in a field-programmable gate array (23).

11. Apparatus (10) for range finding, said apparatus (10) comprising:
- a laser source (T1) for emitting a high energy laser pulse (p(t)) towards a surface (22) to be investigated,
- a sensor (32), preferably an avalanche photo diode, for receiving a portion (p'(t)) of said laser pulse (p(t)) after it has been reflected at said surface (22),
- means (33) for performing an analog-to-digital conversion of output signals (s'(t)) provided by said sensor (32) to obtain digital sensor data samples (sk),
- a sample storage (31) for storing a set of said sensor data samples, and
- a hardware control unit (30) for processing said set of said sensor data samples (sk) by scanning them with generic pulse shapes ({ri(t-δ,σ)}) which are allowed to vary continuously over one or more variation parameters (δ, σ),
wherein said processing provides a correlation of pulse features of said output signals (s'(t)) provided by said sensor (32) with said variation parameters (δ, σ) of a number of given families of generic pulse shapes ({ri(t-δ,σ)}), and wherein then the respective pulse shape family ({ri(t-δ,σ)}) is determined where the variation parameters (δ, σ) match the variation parameters (δ, σ) of said output signals (s'(t)).

12. The apparatus (10) of claim 11, wherein said laser source (T1) provides a start pulse signal (s0) to said hardware control unit (30) via a connection (34).

13. The apparatus (10) of claim 11 or 12, wherein said sensor (32) is situated on a Peltier cooling element.

14. The apparatus (10) of one of the claims 11 through 13, further comprising a rangefinder control board (35) being operably connected to said hardware control unit (30).

15. Satellite or space craft comprising an apparatus (10) according to one of the claims 11 through 14.

## Patentansprüche

1. Verfahren zur Durchführung eines Entfernungsmessungsvorgangs, umfassend die folgenden Schritte:
- Ausstrahlen eines hochenergetischen Laserpulses (p(t)) durch eine Laserquelle (T1), um ihn zu einer zu untersuchenden Oberfläche (22) zu senden,
- Empfangen eines Teils (p'(t)) des Laserpulses (p(t)) durch einen Sensor (32), nachdem er an der Oberfläche (22) reflektiert wurde,
- wobei der Sensor (32) eine Umwandlung von Licht in Elektrizität durchführt, um ein analoges Sensorsignal (s'(t)) zu erhalten, das den empfangenen Teil (p'(t)) repräsentiert,
- Abtasten des analogen Sensorsignals (s'(t)), um digitale Sensordatenabtastwerte (sk) zu erhalten, die wenigstens einen Teil des Informationsgehalts tragen, der in dem empfangenen Teil (p'(t)) enthalten ist,
- Speichern eines Satzes von Sensordatenabtastwerten des analogen Sensorsignals (s'(t)), die einem bestimmten Bereichfenster entsprechen, in einem Puffer (31),
- Verarbeiten der Sensordatenabtastwerte (sk) mittels einer Hardwaresteuereinheit (30),
**dadurch gekennzeichnet, dass**
- die Verarbeitung der Sensordatenabtastwerte (sk) erfolgt, indem sie mit generischen Pulsformen ({ri(t-δ,σ)}) abgetastet werden, wobei t die Zeit angibt, i für einen Familienindex steht und { } den Satz aller Formen angibt, die zur Familie i gehören und die kontinuierlich über einen oder mehrere Variationsparameter (δ, σ) variieren können, wobei δ eine Zeitverschiebungsvariable der Pulsform ist und σ eine Merkmalsvariable der Pulsform ist,
- die Verarbeitung eine Korrelation zwischen den Pulsmerkmalen des analogen Sensorsignals (s'(t)) und den Variationsparametern (δ, σ) einer Anzahl von gegebenen Familien von generischen Pulsformen ({ri(t-δ,σ)}) bereitstellt und wobei anschließend die jeweilige Pulsformfamilie ({ri(t-δ,σ)}) bestimmt wird, wobei die Variationsparameter (δ, σ) mit den Variationsparametern (δ, σ) des analogen Sensorsignals (s'(t)) übereinstimmen.

2. Verfahren nach Anspruch 1, wobei die Verarbeitung mittels einer feldprogrammierbaren Anordnung (23) erfolgt.

3. Verfahren nach Anspruch 1 oder 2, umfassend den folgenden Schritt:
- Durchführen eines Bereichfenster-Nachverfolgungsvorgangs.

4. Verfahren nach Anspruch 3, wobei der Bereichfenster-Nachverfolgungsvorgang durchgeführt wird, indem:
- eine Startzeit des Bereichfensters in Bezug auf eine Pulssendezeit (t0) bestimmt wird.

5. Verfahren nach einem der Ansprüche 1 bis 4, umfassend den folgenden Schritt:
- Durchführen eines Entfernungsnachverfolgungsvorgangs, um zu gewährleisten, dass die Wahrscheinlichkeit eines Fehlalarms über einen fortlaufenden Durchgang von Entfernungsmessungsversuchen gering gehalten wird.

6. Verfahren nach Anspruch 5, wobei der Entfernungsnachverfolgungsvorgang durchgeführt wird, indem:
- die Ankunftszeit (TOA) mehrerer empfangener Pulse (p(t)) über einen fortlaufenden Durchgang von Entfernungsmessungsversuchen in dem Bereichfenster nachverfolgt wird.

7. Verfahren nach einem der Ansprüche 1 bis 6, umfassend den folgenden Schritt:
- Durchführen eines Entfernungserfassungsvorgangs mit Hilfe einer Hardware-Entfernungserfassungs-Implementierung, um die gewünschten experimentellen Daten aus dem Satz von Sensordatenabtastwerten in dem Bereichfenster zu extrahieren.

8. Verfahren nach einem der Ansprüche 1 bis 6, umfassend den folgenden Schritt:
- Durchführen eines Entfernungserfassungsvorgangs mit Hilfe einer Hardware-Entfernungserfassungs-Implementierung, wobei geeignete Pulsmodelle verwendet werden, um die Menge der Berechnungen zu reduzieren.

9. Verfahren nach Anspruch 7 oder 8, wobei der Entfernungserfassungsvorgang durchgeführt wird, indem:
- eine oder mehrere der folgenden gewünschten experimentellen Daten:
- Pulsankunftszeit (TOA), und/oder
- Pulsmerkmale, und/oder
- Pulsenergie
auf der Basis des Satzes von Sensordatenabtastwerten in dem Bereichfenster bestimmt werden.

10. Verfahren nach Anspruch 7 oder 8, wobei der Entfernungserfassungsvorgang durchgeführt wird, indem ein rein digitaler Ansatz in einer feldprogrammierbaren Gate-Anordnung (23) angewendet wird.

11. Vorrichtung (10) zur Entfernungsmessung, wobei die Vorrichtung (10) Folgendes umfasst:
- eine Laserquelle (T1) zum Ausstrahlen eines hochenergetischen Laserpulses (p(t)) zu einer zu untersuchenden Oberfläche (22),
- einen Sensor (32), vorzugsweise eine Lawinenfotodiode, um einen Teil (p'(t)) des Laserpulses (p(t)) zu empfangen, nachdem er an der Oberfläche (22) reflektiert wurde,
- Mittel (33) zur Durchführung einer Analog/Digital-Wandlung von Ausgabesignalen (s'(t)), die von dem Sensor (32) geliefert wurden, um digitale Sensordatenabtastwerte (sk) zu erhalten,
- einen Abtastwertspeicher (31) zum Speichern eines Satzes der Sensordatenabtastwerte, und
- eine Hardwaresteuereinheit (30) zur Verarbeitung des Satzes der Sensordatenabtastwerte (sk), indem sie mit generischen Pulsformen ({ri(t-δ,σ)}) abgetastet werden, die kontinuierlich über einen oder mehrere Variationsparameter (δ, σ) variieren können,
wobei die Verarbeitung eine Korrelation zwischen den Pulsmerkmalen der vom Sensor (32) gelieferten Ausgabesignale (s'(t)) und den Variationsparametern (δ, σ) einer Anzahl von gegebenen Familien von generischen Pulsformen ({ri(t-δ,σ)}) bereitstellt und wobei anschließend die jeweilige Pulsformfamilie ({ri(t-δ,σ)}) bestimmt wird, wenn die Variationsparameter (δ, σ) mit den Variationsparametern (δ, σ) der Ausgabesignale (s'(t)) übereinstimmen.

12. Vorrichtung (10) nach Anspruch 11, wobei die Laserquelle (T1) über eine Verbindung (34) ein Startpulssignal (s0) an die Hardwaresteuereinheit (30) liefert.

13. Vorrichtung (10) nach Anspruch 11 oder 12, wobei der Sensor (32) auf einem Peltier-Kühlelement angeordnet ist.

14. Vorrichtung (10) nach einem der Ansprüche 11 bis 13, ferner umfassend eine Entfernungsmessungs-Steuerplatine (35), die operativ mit der Hardwaresteuereinheit (30) verbunden ist.

15. Satellit oder Raumfahrzeug, umfassend eine Vorrichtung (10) nach einem der Ansprüche 11 bis 14.

## Revendications

1. Procédé de réalisation d'une procédure de télémétrie, comprenant les étapes consistant à:
- émettre depuis une source laser (T1) une impulsion laser à haute énergie (p(t)) pour une transmission vers une surface (22) à analyser,
- recevoir au niveau d'un détecteur (32) une portion (p'(t)) de ladite impulsion laser (p(t)) après qu'elle a été réfléchie sur ladite surface (22)"
- ledit détecteur (32) réalisant une conversion de lumière en électricité pour obtenir un signal analogique de détecteur (s'(t)) représentant ladite portion reçue (p'(t)),
- échantillonner le signal analogique de détecteur (s'(t)) pour obtenir des échantillons de données numériques de détecteur (sk) qui portent au moins une partie du contenu des informations contenues dans ladite portion reçue (p'(t)),
- enregistrer dans un tampon (31) un jeu d'échantillons de données de détecteur qui correspondent à une certaine fenêtre de distance, dudit signal analogique de détecteur (s'(t)),
- traiter lesdits échantillons de données de détecteur (sk) au moyen d'une unité de commande matérielle (30),
**caractérisé en ce que** :
- ledit traitement desdits échantillons de données de détecteur (sk) est réalisé en les balayant avec des formes d'impulsions génériques ({ri(t-δ, σ)}), où t est le temps, i est un indice de famille, et { } représente le jeu de toutes les formes appartenant à la famille i, que l'on peut faire varier en continu sur un ou plusieurs paramètres de variation (δ, σ) où δ est une variable de décalage dans le temps de la forme d'impulsion et σ est une variable de propriété de la forme d'impulsion,
- ledit traitement fournit une corrélation des propriétés d'impulsion dudit signal analogique de détecteur (s'(t)) avec lesdits paramètres de variation (δ, σ) d'un nombre de familles données de formes d'impulsions génériques ({ri(t-δ, σ)}), et où la famille de forme d'impulsion générique ({ri(t-δ, σ)}) est alors déterminée quand les paramètres de variation (δ σ) correspondent aux paramètres de variation (δ, σ) dudit signal analogique de détecteur (s'(t)).

2. Procédé selon la revendication 1, dans lequel ledit traitement est réalisé au moyen d'une matrice programmable (23).

3. Procédé selon la revendication 1 ou 2, comprenant l'étape consistant à :
- réaliser une opération de poursuite de la fenêtre de distance.

4. Procédé selon la revendication 3, dans lequel l'opération de poursuite de la fenêtre de distance est réalisée :
- en déterminant un instant de départ de ladite fenêtre de distance par rapport à un instant de transmission d'impulsion (t0).

5. Procédé selon l'une des revendications 1 à 4, comprenant l'étape consistant à :
- réaliser une opération de poursuite de distance pour garantir que la probabilité d'une fausse alarme sur une séquence consécutive d'expériences de télémétrie est maintenue à un faible niveau.

6. Procédé selon la revendication 5, dans lequel l'opération de poursuite de distance est réalisée :
- en poursuivant l'instant d'arrivée (TOA) de plusieurs impulsions reçues (p(t)) sur une séquence consécutive d'expériences de télémétrie au sein de ladite fenêtre de distance.

7. Procédé selon l'une des revendications 1 à 6, comprenant l'étape consistant à :
- réaliser une opération de détection de distance au moyen d'une mise en oeuvre matérielle de détection de distance pour extraire les données d'expérience souhaitées dudit jeu d'échantillons de données du détecteur dans ladite fenêtre de distance.

8. Procédé selon l'une des revendications 1 à 6, comprenant l'étape consistant à :
- réaliser une opération de détection de distance au moyen d'une mise en oeuvre matérielle de détection de distance en utilisant des modèles d'impulsions appropriés afin de réduire la quantité de calculs.

9. Procédé selon la revendication 7 ou 8, dans lequel l'opération de détection de distance est réalisée :
- en déterminant une ou plusieurs des données d'expérience souhaitées suivantes :
- moment d'arrivée de l'impulsion (TOA), et/ou
- propriétés de l'impulsion, et/ou
- énergie d'impulsion,
à partir dudit jeu d'échantillons de données de détecteur de ladite fenêtre de distance.

10. Procédé selon la revendication 7 ou 8, dans lequel l'opération de détection de distance est réalisée en utilisant une approche purement numérique dans un dit réseau de portes programmable par l'utilisateur (23).

11. Appareil (10) de télémétrie, ledit appareil (10) comprenant :
- une source laser (T1) permettant d'émettre une impulsion laser à haute énergie (p(t)) vers une surface (22) à analyser,
- un détecteur (32), de préférence une photodiode à avalanche, permettant de recevoir une portion (p'(t)) de ladite impulsion laser (p(t)) après qu'elle a été réfléchie au niveau de ladite surface (22),
- des moyens (33) permettant de réaliser une conversion analogique-numérique des signaux de sortie (s'(t)) fournis par ledit détecteur (32) afin d'obtenir des échantillons de données de détecteur numériques (sk),
- un stockage d'échantillons (31) permettant de stocker un jeu desdits échantillons de données de détecteur, et
- une unité de commande matérielle (30) permettant de traiter ledit jeu d'échantillons de données de détecteur (sk) en les balayant avec des formes d'impulsions génériques ({ri(t-δ, σ)}), que l'on peut faire varier en continu sur un ou plusieurs paramètres de variation (δ, σ),
où ledit traitement fournit une corrélation des propriétés d'impulsions desdits signaux de sortie (s'(t)) fournis par ledit détecteur (32) avec lesdits paramètres de variation (δ, σ) d'un nombre de familles données de formes d'impulsions génériques ({ri(t-δ, σ)}), et où la famille respective de formes d'impulsions ({ri(t-δ, σ)}) est déterminée quand les paramètres de variation (δ, σ) correspondent aux paramètres de variation (δ, σ) desdits signaux de sortie (s'(t)).

12. Appareil (10) selon la revendication 11, dans lequel ladite source laser (T1) fournit un signal d'impulsion de départ (s0) à ladite unité de commande matérielle (30) via une connexion (34).

13. Appareil (10) selon la revendication 11 ou 12, dans lequel ledit détecteur (32) est situé sur un élément de refroidissement par effet Peltier.

14. Appareil (10) selon l'une des revendications 11 à 13, comprenant en outre un tableau de commande de télémétrie (35) relié par fonctionnement à ladite unité de commande matérielle (30).

15. Satellite ou astronef comprenant un appareil (10) selon l'une des revendications 11 à 14.
